# FASCICULE DE BREVET EUROPEEN

(11) **EP 1 420 980 B1**
(45) Date de publication et mention de la délivrance du brevet: **26.05.2010**
(21) Numéro de dépôt: 02777400.9
(22) Date de dépôt: 25.07.2002
(51) Int. Cl.: B60P 1/44

(54) **PROCEDE DE COMMANDE DE RAMBARDES LATERALES D'UN ELEVATEUR D'UN VEHICULE ET DISPOSITIF LE METTANT EN OEUVRE**
VERFAHREN ZUR STEUERUNG DER SEITENGELÄNDER EINES FAHRZEUGAUFZUGS UND VORRICHTUNG DAFÜR
METHOD FOR CONTROLLING A VEHICLE ELEVATOR SIDE RAILS AND DEVICE THEREFOR

(30) Priorité: 25.07.2001 FR 0109920
(43) Date de publication de la demande: 26.05.2004
(73) Titulaire: Bourgeois, Alain, Dungarvan, Co. Waterford (IE)
(72) Inventeur: Bourgeois, Alain, Dungarvan, Co. Waterford (IE)
(74) Mandataire: Oudin, Stéphane
(86) Numéro de dépôt international: PCT/FR2002/002669
(87) Numéro de publication internationale: WO 2003/010028

(56) Documents cités:
- EP-A- 0 885 770
- DE-U- 7 809 142
- US-A- 4 482 284
- US-A- 4 551 056
- US-A- 4 718 812
- US-A- 6 039 528

## Description

La présente invention concerne un procédé de commande de rambardes latérales pivotantes, montées sur les côtés d'un plateau d'une plate-forme mobile d'un élévateur d'un véhicule et un dispositif mettant en oeuvre le procédé.

Un tel dispositif est connu du document US 6 039 528 A.

Certains véhicules sont équipés d'un hayon élévateur comportant une plate-forme mobile entre une position inférieure, au niveau du sol, et une position supérieure, au niveau du plancher du véhicule et vice et versa. Cette plate-forme est actionnée pour transporter des marchandises entre les deux niveaux supérieur ou inférieur ou bien encore pour permettre à des personnes à mobilité réduite, notamment des handicapés en fauteuil roulant, de monter dans un véhicule ou d'en descendre. Lorsque la plate-forme mobile n'est pas utilisée, elle est généralement escamotée dans un logement situé sous le plancher du véhicule. De ce fait, elle doit présenter une épaisseur la plus réduite possible d'une part pour lui permettre de tenir le moins de place possible en position de rangement et d'autre part pour des raisons d'accessibilité lorsqu'elle se trouve au sol.

La présente invention confirme des perfectionnements apportés à ces plates-formes mobiles dans le but d'accroître leur sécurité lors du transport vertical de marchandises ou de personnes, grâce à la prévision de rambardes latérales escamotables commandées automatiquement.

A cet égard, on connaît déjà des plates-forme mobiles comprenant des rambardes latérales escamotables commandées automatiquement ; c'est le cas, par exemple, du brevet américain US 4.718,812 décrivant une plate-forme élévatrice d'un véhicule pivotant sur le côté d'un véhicule et comprenant une rambarde. La plate-forme comprend une rambarde latérale constituée d'une main courante horizontale et de deux montants solidaires d'un axe s'étendant le long de l'un des côtés orthogonaux de la plate-forme, c'est-à-dire l'un des côtés s'étendant perpendiculairement au véhicule lorsque la plate-forme est en position horizontale active. La rambarde se relève automatiquement depuis une position de repos où ladite rambarde s'étend parallèlement à la plate-forme, lorsque cette dernière est repliée dans sa position de repos verticale, jusqu'à une position active verticale où la rambarde s'étend perpendiculairement à la plate-forme lorsque cette dernière est dans sa position active horizontale. Le mouvement de la rambarde depuis sa position de repos jusqu'à sa position verticale active est obtenue par des cames contre-coudées, c'est-à-dire des cames présentant un pas globalement hélicoïdal, connectées entre la plate-forme et l'axe, ledit axe étant solidaire des montants de la rambarde et monté libre en rotation et en translation. Ainsi, la rotation de la plate-forme depuis sa position de repos verticale jusqu'à sa position active horizontale, entraîne la translation de l'axe portant la rambarde de telle sorte que les parties inférieures des montants de ladite rambarde s'engagent dans les cames contre-coudées et provoquent la rotation de la rambarde depuis sa position de repos jusqu'à sa position verticale active.

Ce type de dispositif présente l'inconvénient de ne pas être adaptable à un hayon élévateur dont la plate-forme est escamotable dans un logement situé sous le plancher du véhicule suivant un mouvement de translation et non de rotation. De plus, les cames qui forment butée lorsque la rambarde s'étend verticalement afin d'éviter que cette dernière ne reviennent dans sa position horizontale de repos, sont totalement inefficaces dès lors que ce produit une fuite dans le vérin hydraulique ou dans le système hydraulique d'alimentation dudit vérin.

L'un des but de l'invention est donc de remédier à ces inconvénients en proposant des perfectionnements aux rambardes latérales escamotables des plates-forme mobiles afin d'améliorer leur sécurité lors du transport vertical de marchandises ou de personnes.

A cet effet, et conformément à l'invention, il est proposé un procédé de commande de rambardes latérales pivotantes, montées sur les côtés d'un plateau d'une plate-forme d'un élévateur d'un véhicule, la rambarde et les côtés du plateau comprenant des moyens de blocage et respectivement des moyens de blocage complémentaires remarquables en ce qu'il consiste à amener la rambarde depuis une position horizontale inactive où la rambarde s'étend parallèlement au plateau jusqu'à une position verticale active et inversement de telle sorte que les moyens de blocage de la rambarde coopèrent progressivement avec les moyens complémentaires des côtés du plateau en fin de course de relevage afin d'assurer le blocage de la rambarde en position verticale active et que lesdits moyens de blocage de la rambarde se désengagent progressivement des moyens complémentaires des côtés du plateau en début de course d'abaissement de ladite rambarde.

Un autre objet de l'invention concerne un dispositif de commande de rambardes latérales pivotantes montées sur les côtés d'un plateau d'une plate-forme mobile d'un élévateur d'un véhicule mettant en oeuvre le procédé remarquable en ce qu'il comprend, pour la commande de chaque rambarde, un organe moteur connecté à l'extrémité libre d'une bielle s'étendant vers le haut, l'extrémité de la bielle étant accouplée à la rambarde de telle sorte que l'organe moteur entraîne en translation, dans les deux sens, l'extrémité de la bielle et provoque le pivotement, dans les deux sens, de la rambarde, depuis une position horizontale inactive où la rambarde s'étend parallèlement au plateau jusqu'à une position verticale active et inversement, et en ce que la bielle comprend des moyens de blocage aptes à coopérer en fin de course de relevage et en début de course d'abaissement de la rambarde avec des moyens de blocage complémentaires afin d'assurer le blocage de la rambarde en position active et respectivement le déblocage de ladite rambarde en position active pour permettre son retour à sa position inactive.

D'autres avantages et caractéristiques ressortiront mieux de la description qui va suivre, de diverses formes d'exécution, données à titre d'exemples non limitatifs, du procédé et du dispositif de commande de rambardes latérales conformes à l'invention, en référence aux dessins annexés sur lesquels :
- la figure 1 est une vue en perspective d'une plate-forme mobile d'un élévateur équipé de deux rambardes latérales pivotantes dont l'une est en position horizontale inactive et l'autre est dressée en position verticale active,
- la figure 2 est une vue en coupe verticale, à plus grande échelle, d'une rambarde latérale et d'un vérin de commande hydraulique situé sous le plateau de la plate-forme, la rambarde latérale étant représentée en position inclinée intermédiaire,
- la figure 3 est une vue en coupe verticale semblable à celle de la figure 2, la rambarde étant représentée en position horizontale inactive,
- les figures 4A, 4B, 4C, 4D, 4E sont des vues en coupe verticale schématique illustrant successivement diverses positions occupées par la rambarde pivotante lors de son mouvement entre sa position horizontale inactive et sa position verticale active,
- les figures 5A, 5B, 5C, 5D, 5E sont des vues en coupe verticale schématique d'une variante d'exécution du dispositif de commande de la rambarde, respectivement dans des positions successives de la rambarde entre sa position horizontale inactive et sa position verticale active,
- les figures 6A et 6B sont des vues en coupe verticale schématique d'une seconde variante d'exécution du dispositif de commande de la rambarde respectivement en position horizontale inactive et en position verticale active.

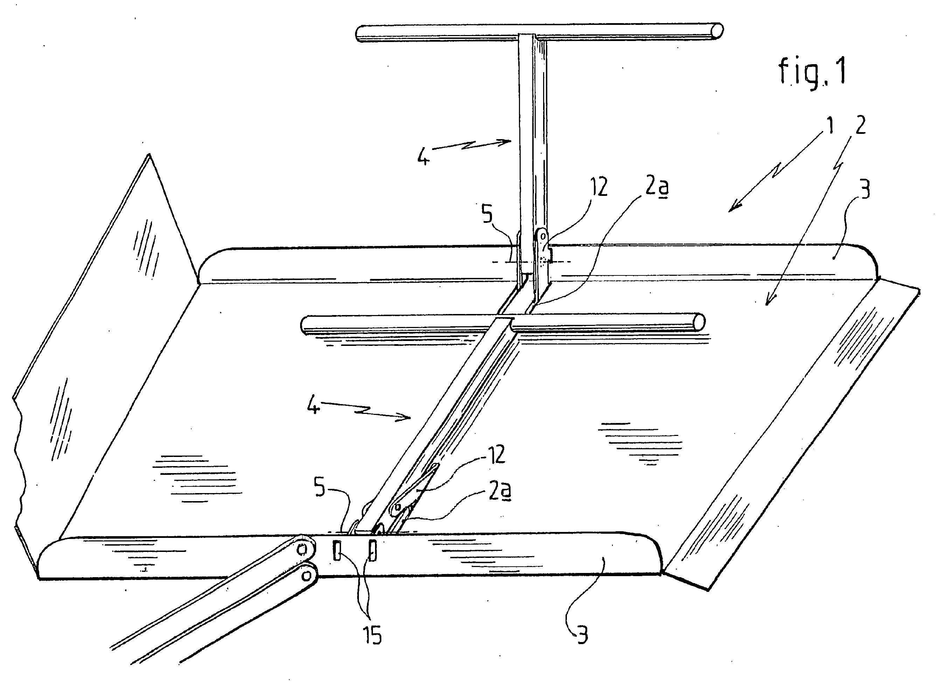

Sur la figure 1 est représentée une plate-forme mobile 1 d'un élévateur d'un véhicule. Cette plate-forme mobile 1 comporte un plateau horizontal 2, de forme rectangulaire, prolongé vers le haut, le long de ses deux grands côtés longitudinaux, par deux bordures verticales 3. La plate-forme 1 peut être déplacée verticalement, par un mécanisme élévateur non représenté entre deux positions extrêmes, à savoir une position inférieure au niveau du sol et une position supérieure au niveau du plancher du véhicule. La plate-forme 1 est équipée de deux rambardes latérales pivotantes 4, dont l'une est représentée en position horizontale inactive et l'autre est dressée en position verticale active. Chacune des rambardes latérales 4 est articulée autour d'un axe longitudinal 5 supporté par une bordure 3 à une certaine distance au-dessus de la surface supérieure du plateau 2. Les axes de pivotement longitudinaux et horizontaux 5 des deux rambardes 4 sont disposés de telle façon que ces rambardes puissent se rabattre l'une sur l'autre, en position horizontale inactive, lorsque la plate-forme 1 est escamotée dans un logement situé sous le plancher du véhicule.

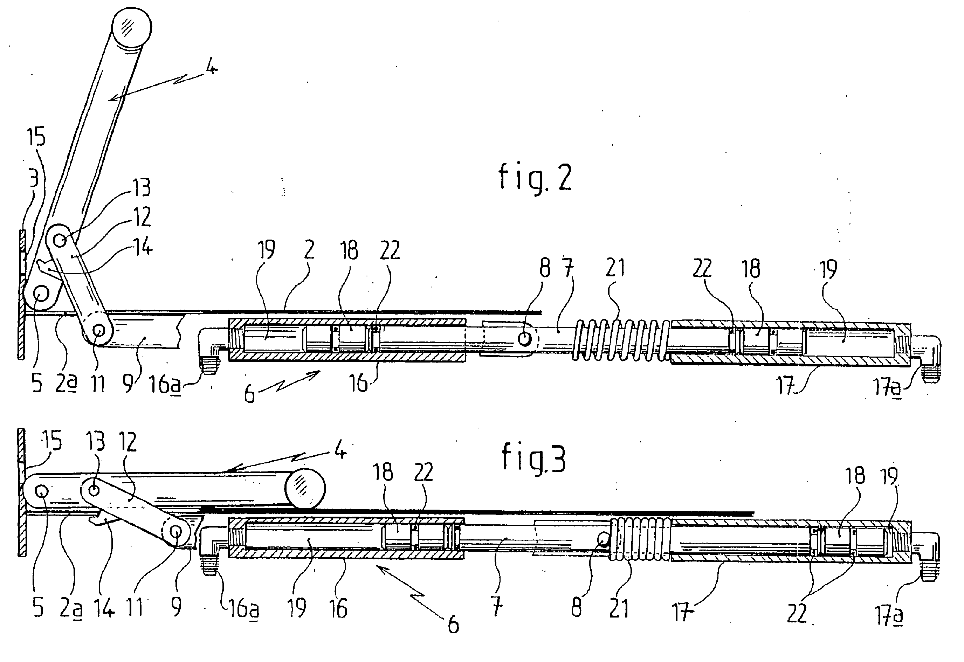

Les figures 2 et 3 représentent une forme d'exécution non limitative d'un dispositif de commande de chaque rambarde latérale pivotante 4. Ce dispositif de commande comporte un organe moteur transversal 6, tel qu'un vérin hydraulique à double effet, s'étendant sous le plateau 2. Le vérin hydraulique 6 comporte une tige axiale 7, mobile dans les deux sens, sur laquelle est articulée, autour d'un axe 8, une partie extrême d'une barre d'actionnement transversale 9 située également sous le plateau 2 où elle est avantageusement guidée longitudinalement, par exemple par un capot non représenté sur les figures. La partie extrême opposée de la barre 9 est articulée autour d'un axe 11, sur l'extrémité inférieure d'une bielle de liaison 12 s'étendant vers le haut, à travers une fente transversale 2a formée dans la partie latérale du plateau 2, à proximité de la bordure 3. La bielle de liaison 12 est articulée, à son extrémité supérieure, sur la rambarde 4, autour d'un axe 13 qui est proche de l'axe de pivotement 5 de la rambarde 4 et parallèle à cet axe ainsi qu'à l'axe d'articulation 11 de la bielle 12 sur la barre 9. La bielle 12 présente également, dans la partie supérieure de son côté tourné vers la bordure 3, une saillie 14, en forme de crochet ouvert vers le haut, qui est destinée à s'engager dans une ouverture 15 formée dans la partie supérieure de la bordure 3, afin de maintenir la rambarde 4 bloquée lorsqu'elle s'étend dans sa position active verticale.

Il est bien évident que le plateau horizontal 2 peut ne pas comprendre de bordures verticales 3, chaque rambarde latérale 4 étant alors articulée autour d'un axe longitudinal solidaire du côté du plateau 2 et la saillie 14 de la bielle 12 étant destinée à s'engager dans une ouverture 15 formée dans un élément fixe du côté du plateau 2 tel qu'une pièce positionnée sur le côté dudit plateau 2.

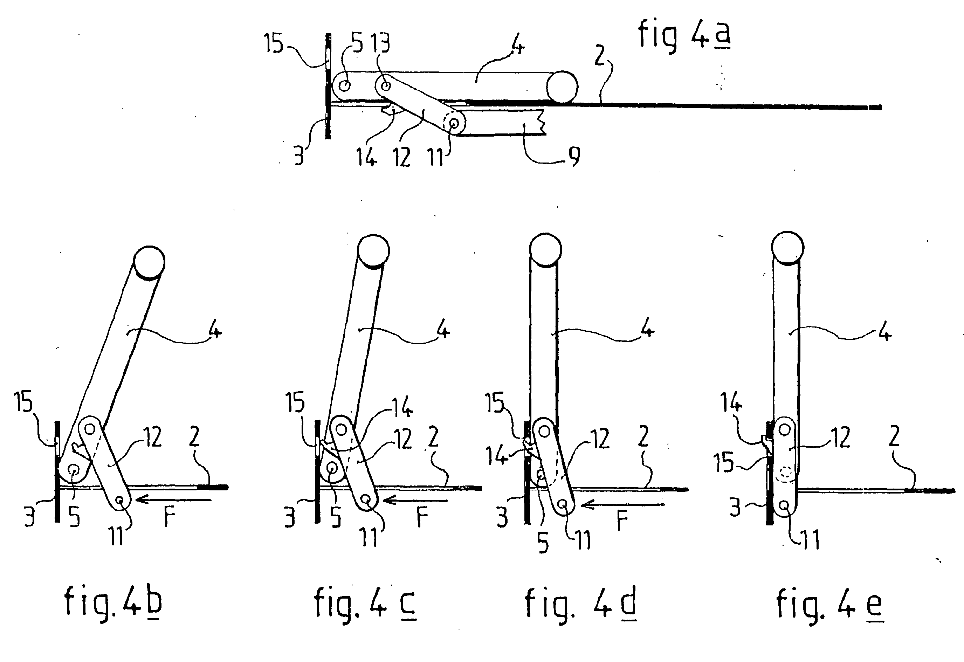

Les figures 4A à 4E illustrent le fonctionnement du dispositif de commande précédemment décrit. Sur la figure 4A la rambarde 4 s'étend horizontalement sur le plateau 2, la bielle de liaison 12 est faiblement inclinée sur l'horizontale et son crochet 14 est situé en dessous du plateau 2. Lorsque le vérin 6 est alimenté de manière à provoquer un coulissement de sa tige 7 et de la barre 9 vers la gauche sur le dessin, cette barre 9 exerce sur l'extrêmité inférieure de la bielle 12 une poussée horizontale vers la gauche indiquée par la flèche F. Cette poussée provoque un déplacement progressif de l'extrêmité inférieure de la bielle 12 vers la gauche laquelle devient de plus en plus inclinée par rapport à l'horizontale, son extrémité supérieure s'élève et ceci provoque un pivotement de la rambarde 4 dans le sens inverse des aiguilles d'une montre, jusqu'à ce que celle-ci arrive à sa position finale dans laquelle elle se dresse verticalement comme représenté sur la figure 4E. Sur la fin du mouvement de la bielle 12 et de la rambarde 4, le crochet 14 solidaire de la bielle 12 passe en remontant à travers l'ouverture 15 et vient s'agripper sur la face externe de la bordure 3, en assurant ainsi le blocage de la rambarde 4 en position verticale, laquelle ne peut alors plus basculer vers l'intérieur de la plate-forme 1. On observera que la rambarde 4 n'est pas maintenue en position verticale active par le vérin 6 mais par le crochet 14 coopérant avec l'ouverture 15 de telle sorte que, en cas de défection du vérin 6, la rambarde 4 reste bloquée dans sa position verticale active évitant ainsi tout risque de chute des utilisateurs du hayon élévateur.

Pour faire passer la rambarde 4 de sa position active verticale à sa position inactive horizontale, le vérin 6 est alimenté en sens opposé, la barre 9 est entraînée vers la droite, c'est-à-dire vers le centre du plateau, et la bielle s'incline de moins en moins par rapport à l'horizontale, ce qui provoque le pivotement de la rambarde 4, dans le sens des aiguilles d'une montre, de sa position verticale active à sa position horizontale inactive.

Le vérin 6 qui est utilisé pour commander le mouvement de pivotement de la rambarde latérale doit avoir des vitesses sensiblement identiques dans les deux sens de fonctionnement et pouvoir tenir sous le plateau 2 dont l'épaisseur est très faible.

Dans la forme d'exécution non limitative représentée sur les figures 2 et 3, le vérin 6 comprend deux corps tubulaires coaxiaux, à savoir un corps gauche 16 et un corps droit 17, distants l'un de l'autre, dans lesquels est engagée la tige 7 du vérin. Cette tige 7 est accouplé à la barre 9, au moyen de l'axe 8, dans la zone libre comprise entre les extrémités internes, c'est-à-dire se faisant face, des deux corps 16,17. Dans chacun des corps tubulaires 16,17 est logé un piston libre 18 lequel délimite une chambre 19 dans laquelle débouche un orifice 16a pour le corps gauche 16 et 17a pour le corps droit 17. Chaque piston libre 18 exerce, lorsque la chambre 19 de son corps 16 ou 17 est alimenté en huile sous pression, une poussée axiale sur la tige 7 si bien que l'alimentation en huile sous pression à travers l'orifice gauche 16a entraîne un déplacement de la tige 7 vers la droite sur la figure 2, pour abaisser la rambarde 4, et l'alimentation en huile sous pression de l'orifice droit 17a provoque un déplacement de la tige 7 vers la gauche pour relever la rambarde 4. Du fait que la tige 7 est séparée des deux pistons 18, cette tige 7 peut avoir un diamètre nettement inférieur à celui des pistons 18, ce qui évite tout risque de coincement et autorise un défaut d'alignement des corps tubulaires 16 et 17 lors de la fabrication du hayon. La surface de poussée de chaque chambre 19 est identique si bien que l'on obtient des vitesses de déplacement identiques de la tige 7 dans les deux sens.

Il est bien évident que pour éviter tout risque de coincement et autoriser un défaut d'alignement des corps tubulaires 16 et 17, le vérin 6 peut comprendre tout moyen approprié pour permettre un débattement de la tige 7 du vérin 6 à l'intérieur des corps tubulaires tels que, par exemple, des rotules solidarisant les extrémités de la tiges 7 aux pistons qui s'étendent à l'intérieur des corps tubulaires ou un usinage de la tige 7 formant un renflement de faible longueur qui constitue le piston, ce dernier comportant un joint d'étanchéité.

Pour aider au relevage de la rambarde latérale 4, un ressort de compression hélicoïdal 21 peut être disposé autour de la tige 7, entre l'axe d'articulation 8 et la face frontale gauche du corps tubulaire droit 17. En position horizontale inactive de la rambarde 4, la tige 7 se trouve dans sa position extrême droite et dans cette position le ressort 21 est comprimé entre l'axe 8 (ou tout autre organe d'appui sur la tige 7) et la face frontale interne du corps tubulaire droit provoquant le relevage de la rambarde 17. Lorsque l'orifice 17a du corps tubulaire droit 17 est alimenté en huile sous pression, pour provoquer le relevage de la rambarde 4, la tige 7 commence à se déplacer vers la gauche et elle est assistée dans ce mouvement par la détente progressive du ressort 21 préalablement comprimé. Cette assistance du ressort 21 peut être fournie sur la totalité de la course de la tige 7 vers la gauche ou seulement sur une partie de celle-ci.

Les deux parties extrêmes de la tige 7 du vérin 6 peuvent présenter des gorges annulaires dans lesquelles sont logées des bagues de frottement 22 qui peuvent être constitués par des joints toriques.

Selon une variante, les vérins 6 commandant le pivotement des deux rambardes latérales opposées 4 peuvent être équipés de ressorts 21 exerçant des efforts différents afin de piloter les mouvements de pivotement des deux rambardes 4 dans un ordre déterminé.

Il est bien évident que le ressort hélicoïdal 21 peut être remplacé par tout autre moyen équivalent tel qu'un vérin à gaz dit compas à gaz, par exemple, apte à exercer un effort entre un point fixe tel qu'une face frontale dudit vérin 6 et une pièces mobile du mécanisme telle que la bielle 12 ou la tige 7 du vérin 6, sans sortir du cadre de l'invention.

De plus, il va de soi qu'un seul des vérins 6 commandant le pivotement des deux rambardes latérales opposées 4 peut être équipé d'un moyen apte à exercer un effort entre un point fixe et une pièce mobile du mécanisme afin de piloter les mouvements de pivotement des deux rambardes 4 dans un ordre déterminé.

Par ailleurs, selon une autre variante non représentée sur les figures, le dispositif peut avantageusement comprendre des moyens aptes à piloter successivement le mouvement de pivotement des rambardes 4, tels que, par exemple, un verrou mécanique apte à bloquer, lors du mouvement de pivotement depuis la position inactive jusqu'à la position active de la première rambarde, la seconde rambarde qui est libéré lorsque la première rambarde 4 arrive en fin de course de passage en position active.

Enfin, il va de soi que les moyens aptes à piloter successivement le mouvement de pivotement des rambardes 4 peuvent consister dans des vérins hydrauliques 6 actionnant chaque rambarde 4 présentant des sections de chambres, c'est-à-dire des section des corps tubulaires, différentes sans sortir du cadre de l'invention.

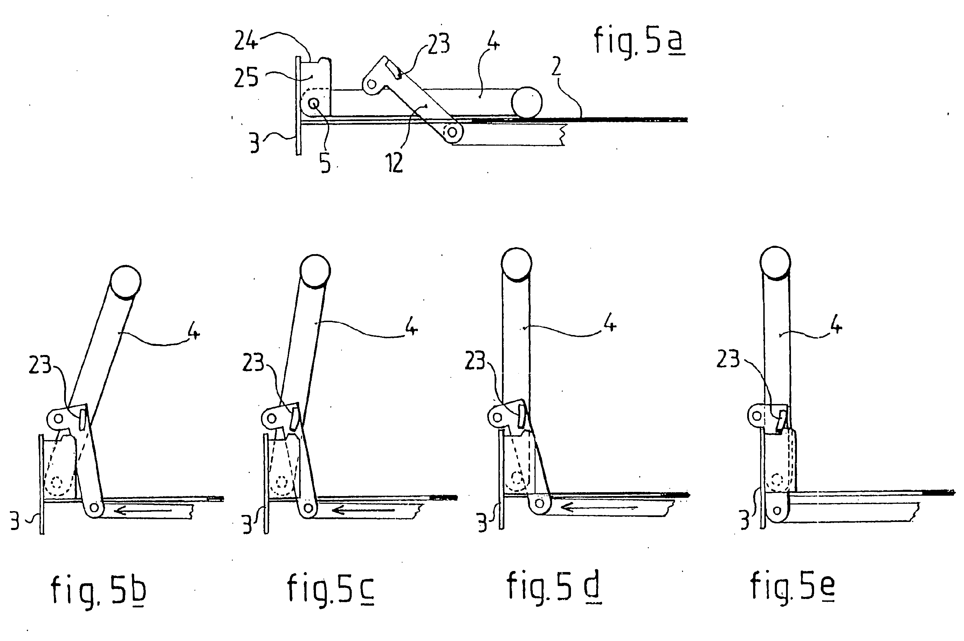

Dans la variante d'exécution représentée sur les figures 5A à 5E le blocage de la rambarde 4 dans sa position verticale active est assuré par une saillie 23 de la partie extrême supérieure de la bielle 12 qui vient s'engager par un mouvement de descente en fin de course de passage en position active, dans un logement ou creux 24 prévu dans le bord supérieur d'une chape 25 fixée à la bordure 3 et supportant l'axe 5

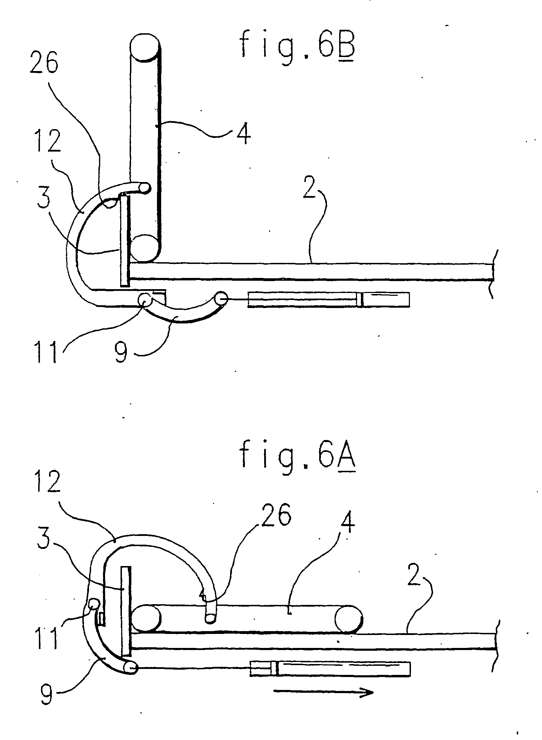

Dans la seconde variante d'exécution représentée sur les figures 6A et 6B, le blocage de la rambardes 4 dans sa position verticale active est assuré par une encoche 26 de la partie extrême supérieure de la bielle 12 en forme d'arc de cercle hémicirculaire s'étendant à l'extérieur du plateau 2 qui vient s'encastrer par un mouvement de descente en fin de course de passage en position active, sur le bord supérieur de la bordure 3, l'extrémité inférieure de la bielle 12 étant articulée autour d'un axe 11 à la partie extrême d'une barre d'actionnement 9, également en forme d'arc de cercle, connectée à la tige d'un vérin hydraulique ou à tout autre moyen d'actionnement.

Lorsque les rambardes latérales 4 sont montées sur la plate-forme mobile d'un élévateur qui est rangée dans un logement, situé sous le plancher du véhicule, lorsqu'elle n'est pas utilisée, les mouvements de relevage et d'abaissement des rambardes latérales 4 doivent avoir lieu durant des périodes de temps précises du cycle total de fonctionnement de l'élévateur. Autrement dit, les rambardes 4 ne doivent pouvoir se lever que lorsque la plate-forme 1 est totalement sortie de son logement et elles doivent être complètement abaissées avant que ne rentre la plate-forme 1 dans son logement sous le plancher du véhicule. Par conséquent, le système de commande hydraulique générale de l'élévateur, comportant une centrale hydraulique envoyant de l'huile sous pression a un moteur hydraulique bidirectionnel, doit être adapté pour tenir compte de ces nécessités. Lorsque l'on veut faire sortir la plate-forme 1 de son logement, l'utilisateur actionne un bouton "sortie" qui commande le démarrage de la centrale hydraulique qui alimente le moteur hydraulique dans un sens provoquant la sortie de la plate-forme hors de son logement. En fin de course de sortie, un contact est actionné afin d'ouvrir un clapet permettant l'alimentation, à travers l'orifice droit 17a, du corps tubulaire 17 du vérin 6 qui est affecté au relevage de chaque rambarde 4. Le contact peut, par exemple, consister dans un micro-contact actionné par la plate-forme 2 lorsque cette dernière arrive en fin de course de sortie.

Lors de l'opération inverse de rentrée, l'utilisateur actionne un bouton "rentrée" qui fait démarrer la centrale hydraulique en sens inverse, laquelle envoie de l'huile dans le moteur commandant le mouvement de rentrée de la plate-forme 1, et à travers l'orifice gauche 16a, dans la chambre 19 du vérin gauche 16 provoquant l'abaissement de la rambarde 4 alors en position verticale active. Cette alimentation de la chambre 19 provoque une chute de pression de l'huile fournie au moteur qui n'a alors plus suffisamment de puissance pour faire rentrer la plate-forme 1 dans son logement et ce, jusqu'à ce que la tige 7 se soit totalement déplacé vers la droite et la rambarde 4 soit appliquée horizontalement sur le plateau 2, en position horizontale inactive. A ce moment le moteur hydraulique récupère la totalité de la pression de l'huile et peut faire rentrer la plate-forme 1 dans son logement.

## Revendications

1. Procédé de commande de rambardes latérales pivotantes (4) montées sur les côtés d'un plateau (2) d'une plate-forme (1) d'un élévateur d'un véhicule, chaque rambarde (4) et les côtés du plateau (2) comprenant des moyens de blocage et respectivement des moyens de blocage complémentaires, **caractérisé en ce qu'**il consiste à amener la rambarde (4) depuis une position horizontale inactive où la rambarde (4) s'étend parallèlement au plateau (2) jusqu'à une position verticale active et inversement de telle sorte que les moyens de blocage de la rambarde (4) coopèrent progressivement avec les moyens complémentaires des côtés du plateau (2) en fin de course de relevage afin d'assurer le blocage de la rambarde (4) en position verticale active et que lesdits moyens de blocage de la rambarde (4) se désengagent progressivement des moyens complémentaires des côtés du plateau (2) en début de course d'abaissement de ladite rambarde (4).

2. Dispositif de commande de rambardes latérales pivotantes (4) montées sur les côtés d'un plateau (2) d'une plate-forme mobile (1) d'un élévateur d'un véhicule mettant en oeuvre le procédé selon la revendication précédente, **caractérisé en ce qu'**il comprend, pour la commande de chaque rambarde (4), un organe moteur (6) connecté à l'extrémité libre d'une bielle (12), l'autre extrémité de la bielle (12) étant accouplée à la rambarde (4) de telle sorte que l'organe moteur entraîne en translation, dans les deux sens, l'extrémité de la bielle (12) et provoque le pivotement, dans les deux sens, de la rambarde (4) depuis une position horizontale inactive où la rambarde (4) s'étend parallèlement au plateau (2) jusqu'à une position verticale active et inversement, et **en ce que** la bielle (12) comprend des moyens de blocage aptes à coopérer en fin de course de relevage et en début de course d'abaissement de la rambarde (4) avec des moyens de blocage complémentaires afin d'assurer le blocage de la rambarde (4) en position verticale active et respectivement le déblocage de ladite rambarde (4) en position active pour permettre son retour à sa position inactive.

3. Dispositif suivant la revendication 2 **caractérisé en ce que** les moyens de blocage de la rambarde (4) en position active sont constitués par un crochet (14) solidaire de la bielle (12) et s'engageant, lorsque la rambarde (4) se trouve dans sa position verticale active, dans une ouverture (15) formée dans un élément fixe du côté du plateau (2) tel qu'une bordure (3) s'étendant le long du côté du plateau (2) ou une pièce solidaire dudit côté du plateau (2).

4. Dispositif suivant la revendication 2 **caractérisé en ce que** les moyens de blocage de la rambarde (4) en position verticale active sont constitués par une saillie (23) prévue sur la partie extrême supérieure de la bielle (12) et s'engageant, en fin de course de relevage de la rambarde (4) en position active, dans un logement ou creux (24) prévu dans le bord supérieur d'une chape (25) supportant un axe de pivotement (5) de la rambarde (4).

5. Dispositif suivant l'une quelconque des revendications 2 à 4 **caractérisé en ce que** l'organe moteur (6) est constitué par un vérin hydraulique à double effet dont la tige (7) est reliée à l'extrémité de la bielle (12) ou à une barre d'actionnement (9) par un axe d'articulation (8), ladite barre (9) étant accouplée à l'extrémité de la bielle (12).

6. Dispositif suivant l'une quelconque des revendications 2 à 5 **caractérisé en ce qu'**il comprend des moyens aptes à exercer un effort entre un point fixe et une pièce mobile du dispositif de commande des rambardes (4).

7. Dispositif suivant la revendication 6 **caractérisé en ce que** les organes moteur (6) commandant respectivement les deux rambardes latérales opposées (4) comprennent des moyens aptes à exercer des efforts sur les pièces mobiles du dispositif de commande des rambardes (4).

8. Dispositif suivant la revendication 7 **caractérisé en ce que** les moyens aptes à exercer des efforts sur les pièces mobiles sont aptes à exercer des efforts différents sur les pièces mobiles de chaque rambarde (4) afin de piloter les mouvements de pivotement des deux rambardes (4) dans un ordre déterminé.

9. Dispositif suivant la revendications 5 à 8 **caractérisé en ce que** les moyens aptes à exercer des efforts sur les pièces mobiles consistent dans un ressort de compression hélicoïdal (21) disposé autour de la tige (7) du vérin pour exercer un effort sur cette tige entre un point d'appui sur cette tige (7), tel que l'axe d'articulation (8) entre la tige (7) et la barre d'actionnement (9), et une face frontale du vérin, ce ressort (21) étant comprimé lorsque la rambarde (4) se trouve en position horizontale inactive afin d'exercer un effort sur la tige (7) pendant le relevage de la rambarde (4).

10. Dispositif suivant l'une quelconque des revendications 2 à 9 **caractérisé en ce qu'**il comprend des moyens aptes à piloter successivement le mouvement de pivotement de chacune des rambardes (4).

11. Dispositif suivant l'une quelconque des revendications 5 à 10 applicable à une plate-forme escamotable dans un logement situé sous le plancher du véhicule et comportant un système de commande hydraulique comprenant une centrale hydraulique apte à envoyer de l'huile sous pression à un moteur hydraulique bidirectionnel, **caractérisé en ce que** le système de commande hydraulique comporte un contact actionnable en fin de course de sortie du logement de la plate-forme (1) qui ouvre un clapet permettant l'alimentation du vérin hydraulique (6) du côté affecté au relevage de chaque rambarde (4), et **en ce que** le côté du vérin (6) provoquant l'abaissement de la rambarde (4) est relié à la sortie de la centrale hydraulique apte à envoyer de l'huile sous pression au moteur commandant le mouvement de la plate-forme (1) afin de rabattre chaque rambarde (4) sur le plateau (2) avant de rentrer la plate-forme 1 dans son logement.

12. Dispositif suivant la revendication 11 **caractérisé en ce** le vérin hydraulique (6) consiste dans un vérin à double effet comprenant un corps tubulaire dans lequel est engagé la tige dudit vérin et en ce que ledit vérin (6) comprend des moyens pour permettre un débattement de la tige du vérin à l'intérieur du corps tubulaire.

13. Dispositif suivant la revendication 12 **caractérisé en ce que** le vérin hydraulique comprend deux corps tubulaires coaxiaux (16,17) distants l'un de l'autre, dans lesquels est engagée la tige (7) du vérin, et **en ce qu'**un piston libre (18) est logé dans chacun des corps tubulaires (16,17) et délimite une chambre (19) dans laquelle débouche un orifice (16a,17a) pouvant être relié à une source d'huile sous pression.

## Claims

1. Method for controlling pivoting side rails (4) mounted on the sides of a plate (2) of a platform (1) of a vehicle elevator, each rail (4) and the sides of the plate (2) comprising means of locking and respectively complementary blocking means, **characterised in that** it consists in bringing the rail (4) from an inactive horizontal position wherein the rail (4) extends parallel to the plate (2) up to an active vertical position and inversely so that the means of locking of the rail (4) gradually cooperate with the complementary means of the sides of the plate (2) at the end of the lifting travel so as to lock the rail (4) in active vertical position and said means locking the rail (4) are gradually released from the complementary means of the sides of the plate (2) at the start of the lowering travel of said rail (4).

2. Device for controlling pivoting side rails (4) mounted on the sides of a plate (2) of a mobile platform (1) of a vehicle elevator implementing the method as claimed in the preceding claim, **characterised in that** it comprises, for the controlling of each rail (4), a motor member (6) connected to the free end of a tie rod (12), the other end of the tie rod (12) being coupled to the rail (4) in such a way that the motor member drives in translation, in both directions, the end of the tie rod (12) and causes the pivoting, in both directions, of the rail (4) from an inactive horizontal position wherein the rail (4) extends parallel to the plate (2) up to an active vertical position and inversely, and **in that** the tie rod (12) comprises means of locking able to cooperate at the end of the lifting travel and at the start of the lowering travel of the rail (4) with the complementary means of locking in order to provide the locking of the rail (4) in active vertical position and respectively the unlocking of said rail (4) in active position in order to allow it to return to its inactive position.

3. Device according to claim 2 **characterised in that** the means of locking the rail (4) in active position are comprised of a hook (14) attached to the tie rod (12) and engaging, when the rail (4) is in its active vertical position, in an opening (15) formed in a fixed element of the side of the plate (2) such as an edge (3) extending along the side of the plate (2) or a part attached to said side of the plate (2).

4. Device according to claim 2 **characterised in that** the means of locking the rail (4) in active vertical position are comprised of a protrusion (23) provided on the extreme upper portion of the tie rod (12) and engaging, at the end of the lifting travel of the rail (4) in active position, in a housing or recess (24) provided in the upper edge of a stirrup (25) supporting a pivoting axis (5) of the rail (4).

5. Device according to any of claims 2 to 4 **characterised in that** the motor member (6) is comprised by double-acting hydraulic cylinder of which the rod (7) is connected to the end of the tie rod (12) or to an actuating bar (9) by an axis of articulation (8), said bar (9) being coupled to the end of the tie rod (12).

6. Device according to any of claims 2 to 5 **characterised in that** it comprised means able to exert a force between a fixed point and a mobile part of the device for controlling rails (4).

7. Device according to claim 6 **characterised in that** the motor members (6) controlling respectively the two opposite side rails (4) include means able to exert forces on the mobile parts of the device for controlling rails (4).

8. Device according to claim 7 **characterised in that** the means able to exert forces on the mobile parts are able to exert different forces on the mobile parts of each rail (4) in order to drive the pivoting movements of the two rails (4) in a determined order.

9. Device according to claims 5 to 8 **characterised in that** the means able to exert forces on the mobile parts consists in a helical compression spring (21) arranged around the rod (7) of the cylinder in order to exert a force on this rod between a bearing point on this rod (7), such as the axis of articulation (8) between the rod (7) and the actuating bar (9), and a frontal face of the cylinder, this spring (21) being compressed when the rail (4) is in inactive horizontal position in order to exert a force on the rod (7) during the lifting of the rail (4).

10. Device according to any of claims 2 to 9 **characterised in that** it comprises means able to successively drive the pivoting movement of each of the rails (4).

11. Device according to any of claims 5 to 10 applicable to a retractable platform in a housing located under the floor of the vehicle and comprising a hydraulic control system comprising a hydraulic station able to send oil under pressure to a reversible hydraulic motor, **characterised in that** the hydraulic control system comprises a contact that can be actuated at the end of the exiting travel of the housing of the platform (1) which opens a valve allowing for the supply of the hydraulic cylinder (6) of the side allocated to the lifting of each rail (4) and **in that** the side of the cylinder (6) causing the lowering of the rail (4) is connected to the output of the hydraulic station able to send oil under pressure to the motor controlling the movement of the platform (1) in order to bring back each rail (4) on the plate (2) before returning the platform 1 in its housing.

12. Device according to claim 11 **characterised in that** the hydraulic cylinder (6) consists of a double-acting cylinder comprising a tubular body wherein is engaged the rod of said cylinder and **in that** said cylinder (6) comprises means in order to allow a displacement of the rod of the cylinder inside the tubular body.

13. Device according to claim 12 **characterised in that** the hydraulic cylinder comprises two coaxial tubular bodies (16, 17) separated from one another, wherein is engaged the rod (7) of the cylinder, and **in that** a free piston (18) is housed in each of the tubular bodies (16, 17) and delimits a chamber (19) wherein exits an orifice (16a, 17a) which can be connected to a source of oil under pressure.

## Patentansprüche

1. Verfahren zum Steuern von schwenkbaren Seitengeländern (4), die an den Seiten einer Auflage (2) einer Plattform (1) eines Aufzugs eines Fahrzeugs angebracht sind, wobei jedes Geländer (4) und die Seiten der Auflage (2) Blockierungsmittel und jeweils ergänzende Blockierungsmittel umfassen, **dadurch gekennzeichnet, dass** es darin besteht, das Geländer (4) aus einer inaktiven waagerechten Position, in der das Geländer (4) sich parallel zur Auflage (2) erstreckt, in eine aktive senkrechte Position und zurück zu bringen, so dass die Blockierungsmittel des Geländers (4) nach und nach mit den ergänzenden Mitteln der Seiten der Auflage (2) am Ende des Anhebungslaufs zusammenwirken, um die Blockierung des Geländers (4) in der aktiven senkrechten Position sicherzustellen, und dass die Blockierungsmittel des Geländers (4) sich nach und nach aus den ergänzenden Mitteln der Seiten der Auflage (2) zu Beginn des Absenkungslaufs des Geländers (4) lösen.

2. Vorrichtung zum Steuern von schwenkbaren Seitengeländern (4), die auf den Seiten einer Auflage (2) einer beweglichen Plattform (1) eines Aufzugs eines Fahrzeugs angebracht sind, die das Verfahren nach dem vorhergehenden Anspruch umsetzt, **dadurch gekennzeichnet, dass** es für die Steuerung jedes Geländers (4) ein Antriebsorgan (6) umfasst, das an das freie Ende einer Triebstange (12) angeschlossen ist, wobei das andere Ende der Triebstange (12) mit dem Geländer (4) gekoppelt ist, so dass das Antriebsorgan das Ende der Triebstange (12) in beiden Richtungen verschiebungsmäßig antreibt und die Verschwenkung des Geländers (4) in beiden Richtungen, aus einer inaktiven waagerechten Position, in der das Geländer (4) sich parallel zur Auflage (2) erstreckt, in eine aktive senkrechte Position und umgekehrt verursacht, und dass die Triebstange (12) Blockierungsmittel umfasst, die dazu geeignet sind, am Ende des Anhebungslaufs und zu Beginn des Absenkungslaufs des Geländers (4) mit ergänzenden Blockierungsmitteln zusammenzuwirken, um die Blockierung des Geländers (4) in der aktiven senkrechten Position und jeweils die Freigabe des Geländers (4) in der aktiven Position sicherzustellen, um seine Rückkehr in seine inaktive Position zu ermöglichen.

3. Vorrichtung nach Anspruch 2, **dadurch gekennzeichnet, dass** die Mittel zum Blockieren des Geländers (4) in der aktiven Position aus einem Haken (14) bestehen, der mit der Triebstange (12) fest verbunden ist, und der, wenn das Geländer (4) sich in seiner aktiven senkrechten Position befindet, in eine Öffnung (15) eingreift, die in einem ortsfesten Element auf der Seite der Auflage (2) gebildet ist, wie etwa eine Einfassung (3), die sich an der Seite der Auflage (2) entlang erstreckt, oder ein Teil, das mit der Seite der Auflage (2) fest verbunden ist.

4. Vorrichtung nach Anspruch 2, **dadurch gekennzeichnet, dass** die Mittel zum Blockieren des Geländers (4) in der aktiven senkrechten Position aus einem Vorsprung (23) bestehen, der auf dem oberen Endbereich der Triebstange (12) bereitgestellt wird und am Ende des Anhebungslaufs des Geländers (4) in die aktive Position in eine Aufnahme oder Vertiefung (24) eingreift, die in dem oberen Rand eines Bügels (25) bereitgestellt wird, der eine Schwenkachse (5) des Geländers (4) stützt.

5. Vorrichtung nach einem der Ansprüche 2 bis 4, **dadurch gekennzeichnet, dass** das Antriebsorgan (6) aus einem Doppeleffekt-Hydraulikzylinder besteht, dessen Stange (7) mit dem Ende der Triebstange (12) und mit einem Betätigungsstab (9) über eine Gelenkachse (8) verbunden ist, wobei der Stab (9) mit dem Ende der Triebstange (12) gekoppelt ist.

6. Vorrichtung nach einem der Ansprüche 2 bis 5, **dadurch gekennzeichnet, dass** sie Mittel umfasst, die dazu geeignet sind, zwischen einem ortsfesten Punkt und einem beweglichen Punkt der Vorrichtung zum Steuern der Geländer (4) eine Belastungskraft auszuüben.

7. Vorrichtung nach Anspruch 6, **dadurch gekennzeichnet, dass** die Antriebsorgane (6), die jeweils die beiden gegenüberliegenden Seitengeländer (4) steuern, Mittel umfassen, die dazu geeignet sind, um Belastungskräfte auf die beweglichen Teile der Vorrichtung zum Steuern der Geländer (4) auszuüben.

8. Vorrichtung nach Anspruch 7, **dadurch gekennzeichnet, dass** die Mittel, die dazu geeignet sind, Belastungskräfte auf die beweglichen Teile auszuüben, dazu geeignet sind, unterschiedliche Belastungskräfte auf die beweglichen Teile jedes Geländers (4) auszuüben, um die Schwenkbewegungen der beiden Geländer (4) in einer bestimmten Reihenfolge anzusteuern.

9. Vorrichtung nach Anspruch 5 bis 8, **dadurch gekennzeichnet, dass** die Mittel, die dazu geeignet sind, Belastungskräfte auf die beweglichen Teile auszuüben, aus einer Schraubendruckfeder (21) bestehen, die um die Stange (7) des Zylinders herum angeordnet ist, um auf diese Stange zwischen einem Stützpunkt auf dieser Stange (7), wie etwa der Gelenkachse (8) zwischen der Stange (7) und dem Betätigungsstab (9), und einer Vorderseite des Zylinders eine Belastungskraft auszuüben, wobei diese Feder (21) zusammengedrückt wird, wenn das Geländer (4) sich in der inaktiven waagerechten Position befindet, um während des Anhebens des Geländers (4) eine Belastungskraft auf den Stange (7) auszuüben.

10. Vorrichtung nach einem der Ansprüche 2 bis 9, **dadurch gekennzeichnet, dass** sie Mittel umfasst, die dazu geeignet sind, nacheinander die Schwenkbewegung jedes der Geländer (4) anzusteuern.

11. Vorrichtung nach einem der Ansprüche 5 bis 10, anwendbar auf eine Plattform, die in eine Aufnahme einziehbar ist, die sich unter dem Boden des Fahrzeugs befindet und ein hydraulisches Steuersystem umfasst, das eine Hydraulikanlage umfasst, die dazu geeignet ist, Drucköl an einen bidirektionalen Hydraulikmotor zu schicken, **dadurch gekennzeichnet, dass** das hydraulische Steuersystem einen Kontakt umfasst, der am Ende des Ausgangslaufs der Aufnahme aus der Plattform (1) betätigt werden kann und eine Klappe öffnet, welche die Versorgung des Hydraulikzylinders (6) auf der Seite ermöglicht, die dem Anheben jedes Geländers (4) zugeordnet ist, und dass die Seite des Zylinders (6), die das Absenken des Geländers (4) verursacht, mit dem Ausgang der Hydraulikanlage verbunden ist, der dazu geeignet ist, Drucköl an den Motor zu schicken, der die Bewegung der Plattform (1) steuert, um jedes Geländer (4) auf die Auflage (2) umzuklappen, bevor er die Plattform (1) in ihre Aufnahme einschiebt.

12. Vorrichtung nach Anspruch 11, **dadurch gekennzeichnet, dass** der Hydraulikzylinder (6) aus einem Doppeleffektzylinder besteht, der einen röhrenförmigen Körper umfasst, in dem die Stange des Zylinders in Eingriff gebracht ist, und dass der Zylinder (6) Mittel umfasst, um der Stange des Zylinders im Innern des röhrenförmigen Körpers einen Spielraum zu ermöglichen.

13. Vorrichtung nach Anspruch 12, **dadurch gekennzeichnet, dass** der Hydraulikzylinder zwei koaxiale röhrenförmige Körper (16, 17) umfasst, die voreinander entfernt sind, in denen die Stange (7) des Zylinders in Eingriff gebracht ist, und dass ein freier Kolben (18) in jedem der röhrenförmigen Körper (16, 17) aufgenommen ist und eine Kammer (19) definiert, in die eine Öffnung (16a, 17a) einmündet, die mit einer Druckölquelle verbunden werden kann.
